(19) Europäisches Patentamt

European Patent Office

Office européen des brevets

(11) **EP 3 951 346 B1**

(12) # EUROPEAN PATENT SPECIFICATION

(45) Date of publication and mention
of the grant of the patent:
**30.04.2025  Bulletin 2025/18**

(21) Application number: **20778069.3**

(22) Date of filing: **13.03.2020**

(51) International Patent Classification (IPC):
**G01M 99/00** *(2011.01)*      **G06F 3/01** *(2006.01)*

(52) Cooperative Patent Classification (CPC):
**G06F 3/016; G01M 99/005; G01M 99/008**

(86) International application number:
**PCT/JP2020/011101**

(87) International publication number:
**WO 2020/195953 (01.10.2020 Gazette 2020/40)**

(54) **TACTILE DEVICE INSPECTION SYSTEM, DEVICE, AND METHOD**

SYSTEM, VORRICHTUNG UND VERFAHREN ZUR PRÜFUNG VON TAKTILEN VORRICHTUNGEN

SYSTÈME, DISPOSITIF ET PROCÉDÉ D'INSPECTION DE DISPOSITIF TACTILE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **28.03.2019  JP 2019062848**

(43) Date of publication of application:
**09.02.2022  Bulletin 2022/06**

(73) Proprietor: **NIPPON TELEGRAPH AND
TELEPHONE CORPORATION**
**Chiyoda-ku, Tokyo 100-8116, (JP)**

(72) Inventors:
• **HIGUCHI, Yuichi**
**Musashino-shi, Tokyo 180-8585 (JP)**
• **HADAMA, Koichi**
**Musashino-shi, Tokyo 180-8585 (JP)**
• **WADA, Toshiki**
**Musashino-shi, Tokyo 180-8585 (JP)**
• **KONDO, Toshihiko**
**Musashino-shi, Tokyo 180-8585 (JP)**

(74) Representative: **Samson & Partner Patentanwälte
mbB**
**Widenmayerstraße 6**
**80538 München (DE)**

(56) References cited:
WO-A1-2007/086426    JP-A- 2006 292 454
JP-A- 2017 009 519    KR-A- 20190 001 842
US-B1- 8 380 561

• **TANABE TAKESHI ET AL: "Evaluation of the
Perceptual Characteristics of a Force Induced by
Asymmetric Vibrations", IEEE TRANSACTIONS
ON HAPTICS, vol. 11, no. 2, 1 April 2018
(2018-04-01), USA, pages 220 - 231,
XP055975255, ISSN: 1939-1412, Retrieved from
the Internet <URL:https://ieeexplore.ieee.org/
stampPDF/getPDF.jsp?tp=&arnumber=8017429&
ref=aHR0cHM6Ly9pZWVleHBsb3JlLmllZ
WUub3JnL2RvY3VtZW50LzgwMTc0Mjk=>
[retrieved on 20221026], DOI: 10.1109/
TOH.2017.2743717**

## Description

Technical Field

The present invention relates to a technology of inspecting a tactile device for generating a traction illusion by vibrations to check the quality of the tactile device.

Background Art

Heretofore, as a pseudo force sense generation device for generating pseudo force sense to a person by using asymmetrical vibrations generated by an actuator, what is called a tactile device has been developed (refer to, for example, Patent Literature 1). This kind of tactile device uses an illusion of a person. The tactile device can generate a traction illusion by which the person feels as if a hand of the person is pulled in a particular direction, even though the hand is not physically pulled.

TANABE TAKESHI ET AL: "Evaluation of the Perceptual Characteristics of a Force Induced by Asymmetric Vibrations" (IEEE TRANSACTIONS ON HAPTICS, vol. 11, no. 2, April 2018, pages 220-231, XP055975255) discloses subject-matter according to the preamble of claim 1.

Citation List

Patent Literature

Patent Literature 1: Domestic Re-publication of PCT International Publication for Patent Application No. 2017-115729

Summary of the Invention

Technical Problem

The tactile device is an electronic device including multiple actuators. When the tactile device is mass-produced as a product and shipped out, it is necessary to carry out an inspection before shipping to check the quality of operation of each manufactured item. In a usual inspection of electronic device before shipping, the electronic device targeted for inspection is operated so that signals from individual parts are detected; in accordance with the objective data indicated by the detected signals, the quality of the target electronic device is checked.

However, the traction illusion that a tactile device operates to generate is a subjective sensation perceived by a person. Hence, it is difficult to detect the traction illusion generated by the tactile device targeted for inspection as objective data to check the quality of the tactile device. In response to this, one conceivable method is a manual inspection method in which a person checks the quality of the traction illusion generated by each tactile device.

However, such an inspection method has a problem in which it is difficult to maintain a consistent level of quality of manufactured items to be shipped out because the evaluation relies on personal views. Furthermore, since the inspection of individual manufactured items needs to be manually carried out, a certain length of time is necessary for accurate manual evaluation. Moreover, many people need to work when the product is mass-produced and efficiently shipped out. As a result, inspection methods in which people perform the evaluation have a problem in which the total cost for inspection significantly increases due to the increase in the time for the inspection before shipping and the increase in labor costs.

The present invention has been made to address such problems, and an object thereof is to provide a tactile device inspection technology for objectively checking the quality of a tactile device.

Means for Solving the Problem

To achieve this object, a tactile device inspection system according to claim 1 is provided.

In one configuration example of the tactile device inspection system according to the present invention, the quality check apparatus is configured, for each sample, to compute a correct answer rate in accordance with the subjective evaluation included in the test result, and check the quality of the sample in accordance with a comparison result of the correct answer rate of the sample to a threshold determined by using a distribution of the correct answer rates of the respective samples.

In one configuration example of the tactile device inspection system according to the present invention, the sample characteristic data and the inspection target characteristic data relate to time response with respect to speed, acceleration rate, position, or force of the tactile device, or any combination of speed, acceleration rate, position, and force of the tactile device.

In one configuration example of the tactile device inspection system according to the present invention, the sample characteristic data and the inspection target characteristic data relate to frequency response with respect to speed, position, or force of the tactile device, or any combination of speed, position, and force of the tactile device.

A tactile device inspection apparatus according to an embodiment includes an arithmetic processing circuit for determining the quality of tactile devices each configured to generate a traction illusion by vibrations. The arithmetic processing circuit includes: a data acquisition unit configured to obtain, from a sample of the tactile devices prepared beforehand, a test result indicating a subjective evaluation of a subject with respect to a traction illusion generated by the sample and objective sample characteristic data representing the traction illusion, and obtain, from an inspection target of the tactile devices targeted for inspection, objective inspection target characteristic data representing a traction illusion generated by the inspection target; a quality check unit configured to check quality of the sample in accordance with the test result; a feature computation unit configured to compute a reference feature to be used to determine quality of the inspection target in accordance with a quality check result indicating the quality of the sample and the sample characteristic data of the sample; and a determination processing unit configured, for each inspection target, to compute an inspection target feature indicating a feature of the traction illusion generated by the inspection target in accordance with the inspection target characteristic data obtained from the inspection target, and determine quality of the inspection target in accordance with a comparison result of the inspection target feature to the reference feature.

A tactile device inspection method according to claim 5 is provided.

Another tactile device inspection method according to an embodiment is used when an arithmetic processing circuit determines the quality of tactile devices each configured to generate a traction illusion by vibrations. The tactile device inspection method includes: a data acquisition step in which the arithmetic processing circuit obtains, from a sample of the tactile devices prepared beforehand, a test result indicating a subjective evaluation of a subject with respect to a traction illusion generated by the sample and objective sample characteristic data representing the traction illusion, and obtains, from an inspection target of the tactile devices targeted for inspection, objective inspection target characteristic data representing a traction illusion generated by the inspection target; a quality check step in which the arithmetic processing circuit checks quality of the sample in accordance with the test result; a feature computation step in which the arithmetic processing circuit computes a reference feature to be used to determine quality of the inspection target, in accordance with a quality check result indicating the quality of the sample and the sample characteristic data of the sample; and a determination processing step in which the arithmetic processing circuit computes, for each inspection target, an inspection target feature indicating a feature of the traction illusion generated by the inspection target in accordance with the inspection target characteristic data obtained from the inspection target, and determines quality of the inspection target in accordance with a comparison result of the inspection target feature to the reference feature.

Effects of the Invention

With the present invention, by using the reference feature Qs previously computed, it is possible to objectively determine the quality of a manufactured item to be shipped out, that is, the inspection target of the tactile device without evaluation based on personal views, and as a result, it is possible to maintain a consistent level of quality of manufactured items to be shipped out. Although the evaluations based on personal views of test subjects are necessary to compute the reference feature, these evaluations are made by using only the prepared samples of the tactile device. For this reason, it is necessary only to perform measurement processing to obtain the inspection target characteristic data of the manufactured item to be shipped out, compute the inspection target feature, and compare the inspection target feature with the reference feature, and thus, it is possible to automatize the inspection before shipping and greatly improve the efficiency of the inspection.

Brief Description of Drawings

[Fig. 1] Fig. 1 is a block diagram illustrating a configuration of a tactile device inspection system according to a first embodiment.
[Fig. 2] Fig. 2 is a flowchart illustrating an example of evaluation test.
[Fig. 3] Fig. 3 is a sequence diagram illustrating a reference feature computation operation according to the first embodiment.
[Fig. 4] Fig. 4 is a sequence diagram illustrating a tactile device inspection operation according to the first embodiment.
[Fig. 5] Fig. 5 is an explanatory diagram indicating test results.
[Fig. 6] Fig. 6 is a graph illustrating a distribution of correct answer rates of samples.
[Fig. 7] Fig. 7 is a graph indicating a difference of correct answer rate between non-defective and defective samples.
[Fig. 8] Fig. 8 is an explanatory diagram indicating quality check results.
[Fig. 9] Fig. 9 is a graph illustrating an alteration characteristic of correct answer rate with respect to the vibration strength of tactile device.
[Fig. 10] Fig. 10 is a graph illustrating the time response of the amplitude of acceleration.
[Fig. 11] Fig. 11 is a graph illustrating the frequency response of the amplitude of acceleration.
[Fig. 12] Fig. 12 is a graph illustrating the time response of the position.
[Fig. 13] Fig. 13 is a graph indicating the standard deviation of the time response of the position.
[Fig. 14] Fig. 14 is a graph illustrating a distribution of features.
[Fig. 15] Fig. 15 is a graph illustrating the quality determination of inspection targets.
[Fig. 16] Fig. 16 is a block diagram illustrating a configuration of a tactile device inspection system according to a second embodiment.
[Fig. 17] Fig. 17 is a sequence diagram illustrating a reference feature computation operation according to the second embodiment.
[Fig. 18] Fig. 18 is a sequence diagram illustrating a tactile device inspection operation according to the second embodiment.

Description of Embodiments

Next, embodiments of the present invention will be described with reference to the drawings.

[Tactile device inspection system]

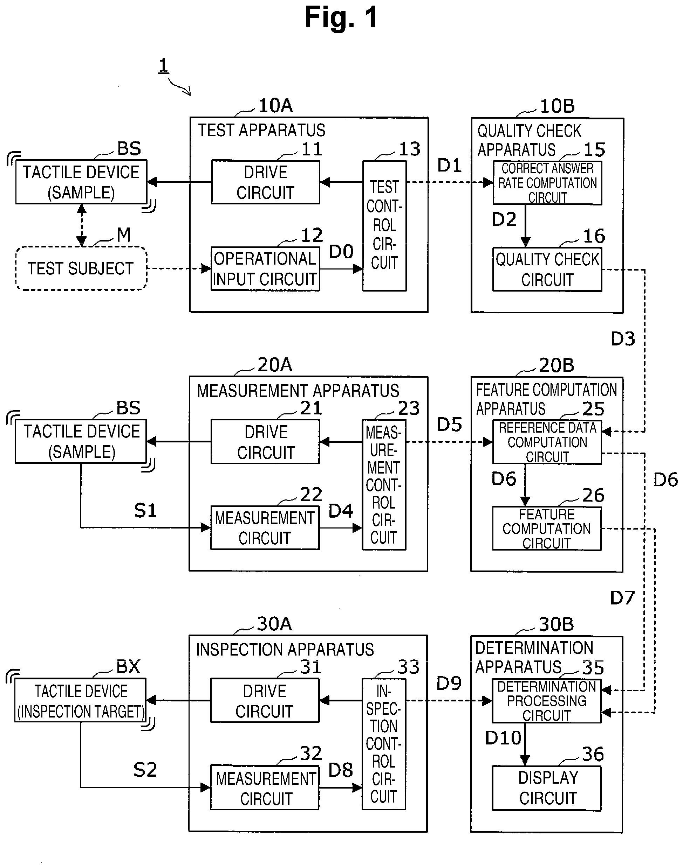

Firstly, a tactile device inspection system 1 according to a first embodiment of the present invention will be described with reference to Fig. 1. Fig. 1 is a block diagram illustrating a configuration of the tactile device inspection system according to the first embodiment.

The tactile device inspection system 1 illustrated in Fig. 1 checks the quality of operation of a tactile device B configured to generate a traction illusion by vibrations. This tactile device inspection system 1 is used for, for example, an inspection before shipping when the tactile device B is mass-produced as a product and shipped out.

As illustrated in Fig. 1, the tactile device inspection system 1 includes, as main apparatuses, a test apparatus 10A, a quality check apparatus 10B, a measurement apparatus 20A, a feature computation apparatus 20B, an inspection apparatus 30A, and a determination apparatus 30B.

Of these apparatuses, before the quality determination of the tactile device B is performed, the test apparatus 10A, the quality check apparatus 10B, the measurement apparatus 20A, and the feature computation apparatus 20B are used at, for example, a laboratory, to compute a reference feature to be used for the quality determination of the tactile device B. After the reference feature is computed, the inspection apparatus 30A and the determination apparatus 30B are used at an actual shipping inspection place to determine the quality of the tactile device B in accordance with the reference feature.

These six apparatuses may be each formed as a logic integrated circuit or a circuit component, or an arithmetic processing circuit implemented by a C reference feature U running a program. Alternatively, these six apparatuses may be implemented as a computer system composed of a server apparatus and an information processing apparatus such as a personal computer (PC) and connected by using communications lines.

The description of the present embodiment uses as an example the case in which these six apparatuses are implemented as discrete apparatuses, but this example should not be construed in a limiting manner. For example, in accordance with the time or place at which each apparatus is used, two or more, or all these apparatuses may be implemented as a single apparatus.

The tactile device B is a device for generating a traction illusion by vibrations; the tactile device B performs a functionality of generating a traction illusion by which a person feels as if a hand of the person is pulled in a particular direction by operating a plurality of actuators to asymmetrically vibrate, even though the hand is not physically pulled. One specific example of the tactile device B is, but not limited to, the pseudo force sense generation device of Patent Literature 1 described above. The present invention can inspect other kinds of tactile devices in a similar manner.

In the present embodiment, one tactile device B prepared to compute a reference feature used for the quality determination is referred to as a sample BS. Additionally, another tactile device B as a target for actual inspection is referred to as an inspection target BX.

[Test apparatus]

Next, a configuration of the test apparatus 10A of the tactile device inspection system 1 according to the present embodiment will be described in detail with reference to Fig. 1. The test apparatus 10A controls the sample BS as a prepared tactile device B to operate so as to generate a traction illusion, and obtains a test result indicating a subjective evaluation result regarding the traction illusion perceived by a test subject Y from the sample BS.

The test apparatus 10A includes a drive circuit 11, an operational input circuit 12, and a test control circuit 13 as main circuit units.

The drive circuit 11 performs a function of generating a traction illusion by operating the sample BS connected with or without a wire connection in accordance with an instruction from the test control circuit 13.

The operational input circuit 12 performs a function of detecting an answer operation D0 of the test subject Y indicating a subjective evaluation result regarding a traction illusion. The subjective evaluation is made by the test subject Y in accordance with the perceived traction illusion generated by the sample BS.

The test control circuit 13 performs a function of instructing the drive circuit 11 to generate a traction illusion and a function of generating a test result D1 by collecting the answer operation D0 detected by the operational input circuit 12.

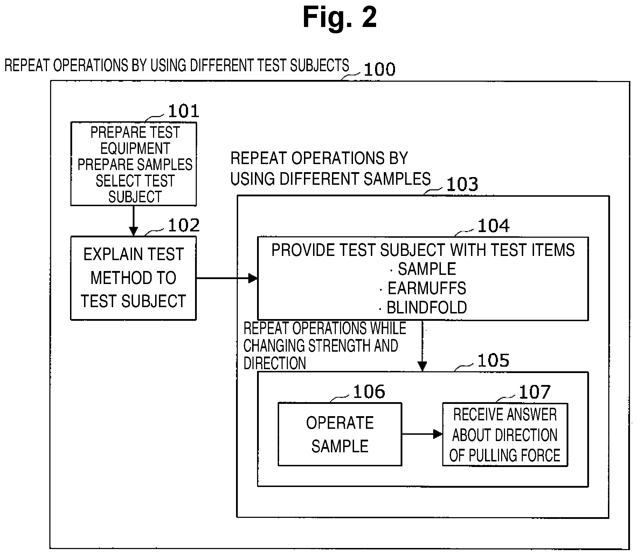

Next, an evaluation test method implemented by the test apparatus 10A will be described. Fig. 2 is a flowchart illustrating an example of evaluation test. Here, the description will be made by using as an example the case in which the sample BS is the tactile device B for generating a traction illusion.

In the evaluation test for the sample BS conducted by the test subject Y, the following steps 101 to 103 are repeatedly performed for individual samples BS by using different test subjects Y (step 100).

Firstly, the test apparatus 10A and a plurality of samples BS are prepared and one test subject Y is selected from a plurality of test subjects (step 101). The test method is explained to the test subject Y (step 102).

Next, the following steps 104 and 105 are repeatedly performed for each of the samples BS (step 103).

Firstly, the test subject Y is handed one selected sample BS, and the test subject Y wears earmuffs for sound insulation and a blindfold (step 104). Next, the following steps 106 and 107 are repeatedly performed while the strength and direction of the traction illusion generated by the sample BS are changed.

Firstly, without providing any information for the test subject Y beforehand, the sample BS is operated to generate a traction illusion of a particular strength in a particular direction that are randomly selected (step 106). The test subject Y inputs the answer operation D0 indicating a subjective evaluation result of the traction illusion perceived by the test subject Y (step 107). At this time, it is assumed that what is called the two-alternative forced choice task is used, in which the traction illusion is generated in either one of two predetermined directions such as the left and right or front and rear directions, and the test subject Y answers one direction in which the test subject Y feels pulled. In both directions, a traction illusion is generated the same number of times.

In this manner, for each sample BS, it is possible to obtain an answer indicating subjective evaluation with regard to the traction illusion that the test subject Y perceived in different strengths in different directions. By obtaining the answers from each test subject, it is possible to obtain the test result D1 based on all the test subjects Y and all the samples BS.

[Quality check apparatus]

Next, a configuration of the quality check apparatus 10B of the tactile device inspection system 1 according to the present embodiment will be described in detail with reference to Fig. 1. The quality check apparatus 10B checks, with respect to each sample BS, the quality of operation of the sample BS in accordance with the test result D1 obtained by the test apparatus 10A.

The quality check apparatus 10B includes a correct answer rate computation circuit 15 and a quality check circuit 16 as main circuit units.

The correct answer rate computation circuit 15 performs a function of computing a correct answer rate D2 for each sample BS in accordance with whether a particular traction illusion generated by the sample BS matches a subjective evaluation result of the particular traction illusion carried out by the test subject Y, that is, the answer operation D0, which are included in the test result D1 obtained by the test apparatus 10A.

The quality check circuit 16 performs a function of determining a threshold for quality determination by statistically processing the correct answer rates D2 of the respective samples BS computed by the correct answer rate computation circuit 15. The quality check circuit 16 also performs a function of generating a quality check result D3 with respect to each sample BS by processing the correct answer rate D2 of the sample BS in accordance with the determined threshold and accordingly checking the quality of the sample BS.

[Measurement apparatus]

Next, a configuration of the measurement apparatus 20A of the tactile device inspection system 1 according to the present embodiment will be described in detail with reference to Fig. 1. The measurement apparatus 20A performs measurement processing to obtain from the sample BS in operation objective sample characteristic data D5 representing the operation of the sample BS.

The measurement apparatus 20A includes a drive circuit 21, a measurement circuit 22, and a measurement control circuit 23 as main circuit units.

The drive circuit 21 performs a function of generating a traction illusion by operating the connected sample BS in accordance with an instruction from the measurement control circuit 23.

The measurement circuit 22 performs a function of performing measurement processing to obtain the objective sample characteristic data D5 representing the operation of the sample BS in operation, that is, a traction illusion generated by the drive circuit 21.

The measurement control circuit 23 performs a function of instructing the drive circuit 21 to generate a traction illusion and a function of generating the sample characteristic data D5 by collecting a measurement result D4 measured by the measurement circuit 22.

Since the present embodiment uses as an example the case in which the tactile device B uses vibrations to generate a traction illusion, the description of the present embodiment uses as an example the case of obtaining acceleration data by using an acceleration sensor as the objective sample characteristic data D5 representing the operation of the tactile device B, that is, a generated traction illusion. One conceivable specific example of the acceleration data is data representing the strength of vibration caused in the tactile device B, or the time or frequency response of the amplitude of acceleration as will be described later. As the sample characteristic data D5, it is possible to use data regarding speed, acceleration rate, position, force of the tactile device B, any combination thereof, or the time or frequency response thereof.

[Feature computation apparatus]

Next, a configuration of the feature computation apparatus 20B of the tactile device inspection system 1 according to the present embodiment will be described in detail with reference to Fig. 1. The feature computation apparatus 20B computes a reference feature D7 to be used to determine quality of the inspection target BX of the tactile device B in accordance with the quality check result D3 obtained by the quality check apparatus 10B as the result of checking the quality of the sample BS and the sample characteristic data D5 obtained by the measurement apparatus 20A.

The feature computation apparatus 20B includes a reference data computation circuit 25 and a feature computation circuit 26 as main circuit units.

The reference data computation circuit 25 performs a function of computing reference data D6 by statistically processing the sample characteristic data D5 of a non-defective sample of the samples BS. The non-defective sample is determined as a non-defective item in the quality check result D3.

The feature computation circuit 26 performs a function of computing, for each sample BS, a match rate between the sample characteristic data D5 of the sample BS and the reference data D6 as a sample feature of the sample BS. The feature computation circuit 26 also performs a function of computing the reference feature D7 in accordance with the sample features of non-defective samples and the sample features of defective samples determined as defective items in the quality check result D3.

[Inspection apparatus]

Next, a configuration of the inspection apparatus 30A of the tactile device inspection system 1 according to the present embodiment will be described in detail with reference to Fig. 1. The inspection apparatus 30A performs measurement processing to obtain objective inspection target characteristic data D9 representing the operation of the inspection target BX in operation.

The inspection apparatus 30A includes a drive circuit 31, a measurement circuit 32, and an inspection control circuit 33 as main circuit units.

The drive circuit 31 performs a function of generating a traction illusion by operating the connected inspection target BX in accordance with an instruction from the inspection control circuit 33.

The measurement circuit 32 performs a function of performing measurement processing to obtain the objective inspection target characteristic data D9 representing the operation of the inspection target BX in operation, that is, a traction illusion generated by the drive circuit 31.

The inspection control circuit 33 performs a function of instructing the drive circuit 31 to generate a traction illusion and a function of generating the inspection target characteristic data D9 by collecting an inspection result D8 obtained by the measurement circuit 32.

Since the present embodiment uses as an example the case in which the tactile device B uses vibrations to generate a traction illusion, the description of the present embodiment uses as an example the case of obtaining acceleration data by using an acceleration sensor as the objective inspection target characteristic data D9 representing the operation of the tactile device B, that is, a generated traction illusion. Conceivable specific examples of the acceleration data include data representing the strength of vibration caused in the tactile device B, or data representing the time or frequency response of the vibration strength as will be described later; in any of these cases, the inspection target characteristic data D9 and the sample characteristic data D5 need to be the same kind of data. As the inspection target characteristic data D9, it is possible to use data regarding speed, acceleration, position, force of the tactile device B, any combination thereof, or the time or frequency response thereof.

[Determination apparatus]

Next, a configuration of the determination apparatus 30B of the tactile device inspection system 1 according to the present embodiment will be described in detail with reference to Fig. 1. The determination apparatus 30B computes, for each inspection target BX, an inspection target feature indicating a feature of a traction illusion generated by the inspection target BX in accordance with the inspection target characteristic data D9 obtained by the inspection apparatus 30A and determines the quality of each inspection target BX in accordance with a comparison result between the inspection target feature and the reference feature D7.

The determination apparatus 30B includes a determination processing circuit 35 and a display circuit 36 as main circuit units.

The determination processing circuit 35 performs a function of computing, for each inspection target BX, an inspection target feature Q indicating a feature of a traction illusion generated by the inspection target BX in accordance with the inspection target characteristic data D9 obtained by the inspection apparatus 30A and a function of determining the quality of the inspection target BX in accordance with a comparison result between the inspection target feature Q and the reference feature D7.

The display circuit 36 performs a function of displaying a determination result D10 indicating the quality of each inspection target BX obtained by the determination processing circuit 35 by using a display device such as a liquid crystal display (LCD) or light emitting diode (LED) display.

[Operation of first embodiment]

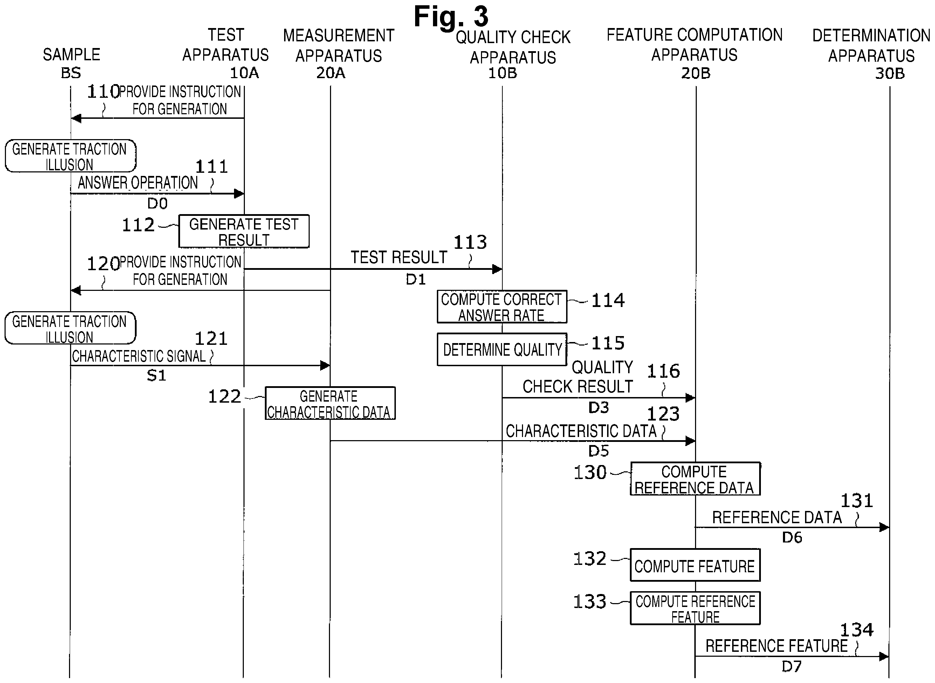

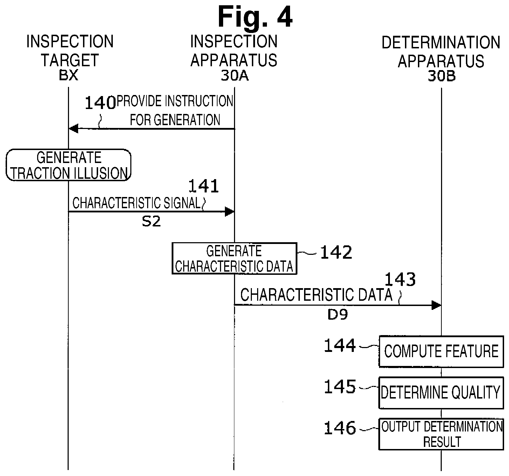

Next, an operation of the tactile device inspection system 1 according to the present embodiment will be described with reference to Figs. 3 and 4. Fig. 3 is a sequence diagram illustrating a reference feature computation operation according to the first embodiment. Fig. 4 is a sequence diagram illustrating a tactile device inspection operation according to the first embodiment.

For ease of understanding, it is assumed that a two-alternative forced choice task is used for the evaluation test of the sample BS by the test subject Y, in which a traction illusion is generated in either one of the two directions of the left and right directions with respect to the sample BS, and the test subject Y answers either one direction in which the test subject Y feels pulled.

Firstly, in Fig. 3, the test apparatus 10A provides an instruction to cause the prepared sample BS of the tactile device B to generate a traction illusion (step 110). In response to this, the test apparatus 10A detects the answer operation D0 of the test subject Y that indicates a subjective evaluation result of the traction illusion generated by the sample BS (step 111). The test apparatus 10A repeats this evaluation test for the different samples BS and the different test subjects Y, generates the test result D1 by collecting the obtained answer operations D0 (step 112), and outputs the test result D1 to the quality check apparatus 10B (step 113).

The quality check apparatus 10B computes the correct answer rate D2 for each sample BS in accordance with whether a particular traction illusion generated by the sample BS matches a subjective evaluation result of the particular traction illusion carried out by the test subject Y, that is, the answer operation D0, which are included in the test result D1 obtained by the test apparatus 10A (step 114).

Subsequently, the quality check apparatus 10B determines a threshold for quality determination by statistically processing the computed correct answer rates D2 of the respective samples BS and generates the quality check result D3 with respect to each sample BS by processing the correct answer rate D2 of the sample BS in accordance with the determined threshold and accordingly checking the quality of the sample BS (step 115). The quality check apparatus 10B then outputs the generated quality check result D3 to the feature computation apparatus 20B (step 116).

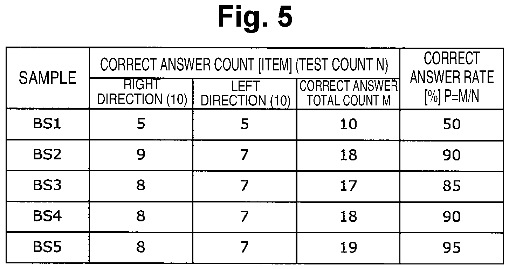

Fig. 5 is an explanatory diagram indicating test results. The test results presented in Fig. 5 are obtained in the case in which five samples BS1, BS2, BS3, BS4, and BS5, each generates traction illusions in the left and right directions. For example, as for the sample BS1, the number of correct answers by the test subject Y is five in the case of generating traction illusion ten times in the right direction; the number of correct answers by the test subject Y is five in the case of generating traction illusions ten times in the left direction; and the total number of correct answers M is ten. A test count N of both the left and right directions is twenty and a correct answer rate reference feature is given by M/N; accordingly, the correct answer rate reference feature of the sample BS1 is 50%.

As for the sample BS2, the number of correct answers by the test subject Y is nine in the case of generating traction illusions ten times in the right direction; the number of correct answers by the test subject Y is seven in the case of generating traction illusions ten times in the left direction; and the total number of correct answers M is eighteen. Since the test count N of both the left and right directions is twenty, the correct answer rate reference feature of the sample BS1 is 90%.

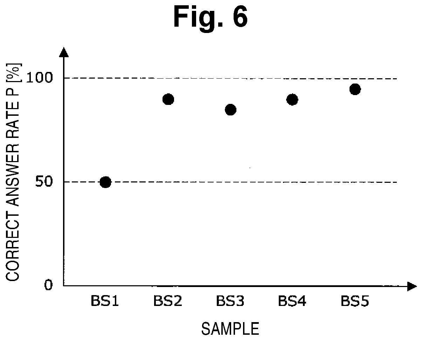

Fig. 6 is a graph illustrating a distribution of correct answer rates of the samples. When correct answer rate reference features are computed for all the samples BS1, BS2, BS3, BS4, and BS5 and a graph is accordingly generated as in Fig. 6, the distribution of these samples BS is divided into two groups with respect to the vertical axis indicating the correct answer rate reference feature. The correct answer rate reference feature close to 50% denotes that the test subject Y is unlikely to correctly perceive the traction illusion generated by the sample BS, which means that the sample BS is a defective item. By contrast, the correct answer rate reference feature close to 100% denotes that the test subject Y is highly likely to correctly perceive the traction illusion generated by the sample BS, which means that the sample BS is a non-defective item.

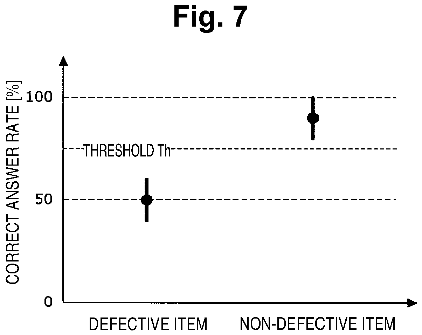

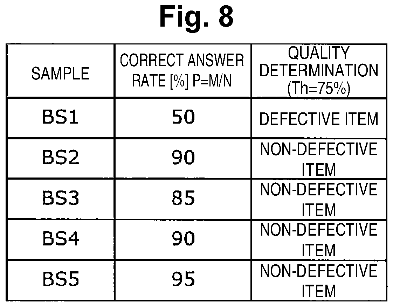

Fig. 7 is a graph indicating a difference of correct answer rate between non-defective and defective samples. Fig. 8 is an explanatory diagram indicating quality check results. In consideration of the difference of correct answer rate between the two groups as illustrated in Fig. 7, a threshold Th for distinguishing between the two groups is determined between the correct answer rate of the sample BS1 and the correct answer rates of the samples BS2, BS3, BS4, and BS5, and accordingly, it is possible to obtain the quality check result D3 of each sample BS as illustrated in Fig. 8 by processing the correct answer rate D2 of the sample BS in accordance with the threshold Th.

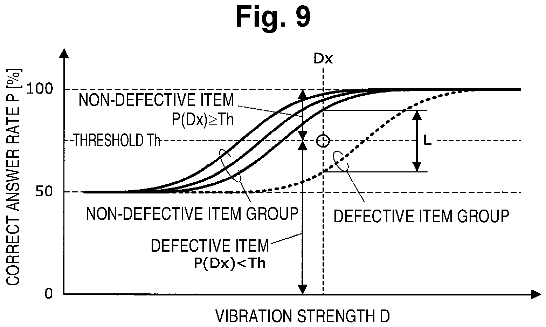

Fig. 9 is a graph illustrating an alteration characteristic of correct answer rate with respect to the vibration strength of the tactile device. The correct answer rates may be obtained while a vibration strength D of the tactile device B is successively changed during the evaluation test conducted by the test subject Y. Usually, when the vibration strength D of the tactile device B is relatively low, the strength of the traction illusion generated by the tactile device B is also relatively low; as a result, it is difficult for the test subject Y to perceive the traction illusion, which results in the correct answer rate reference feature close to 50%. Conversely, when the vibration strength D of the tactile device B is relatively high, the strength of the traction illusion generated by the tactile device B is also relatively high, and as a result, it is easy for the test subject Y to perceive the traction illusion, which results in the correct answer rate reference feature close to 100%. The alteration characteristic of the correct answer rate reference feature related to the vibration strength D changes due to variations of the tactile device B. In this case, the horizontal axis can indicate a representative value regarding current, voltage, acceleration rate, speed, or position, which indicate vibrations of the tactile device B.

Fig. 9 indicates that a gap distance L between the alteration characteristic of a non-defective item group and the alteration characteristic of a defective item group is relatively long when the vibration strength D is Dx. Thus, by setting the midpoint of the gap distance L as the threshold Th, it is possible to more accurately distinguish between the alteration characteristic of the non-defective item group and the alteration characteristic of the defective item group. Consequently, in the evaluation test of the sample BS by the test subject Y, it is possible to more accurately check the quality of the sample BS by operating the sample BS with the vibration strength Dx, at which the gap distance L is the longest, and processing the obtained correct answer rate reference feature in accordance with the threshold Th.

Next, referring to Fig. 3, the measurement apparatus 20A provides an instruction to cause the sample BS to generate a traction illusion (step 120). In response to this, the measurement apparatus 20A measures a characteristic signal S1 representing the traction illusion generated by the sample BS (step 121).

Subsequently, the measurement apparatus 20A generates, in accordance with the measurement result D4 based on the characteristic signal S1, the objective sample characteristic data D5 such as acceleration data, more specifically, data representing, for example, the time or frequency response of the amplitude of acceleration rate (step 122) and outputs the objective sample characteristic data D5 to the feature computation apparatus 20B (step 123).

The feature computation apparatus 20B computes the reference data D6 by statistically processing the sample characteristic data D5 of the non-defective samples BS determined as non-defective items in the quality check result D3 (step 130) and outputs the reference data D6 to the determination apparatus 30B (step 131).

The feature computation apparatus 20B computes, for each sample BS, a match rate between the sample characteristic data D5 of the sample BS and the reference data D6 obtained by the feature computation apparatus 20B as a sample feature of the sample BS (step 132). The feature computation apparatus 20B then computes the reference feature D7 in accordance with the sample features of non-defective samples and the sample features of defective samples determined as defective items in the quality check result D3 (step 133) and outputs the reference feature D7 to the determination apparatus 30B (step 134).

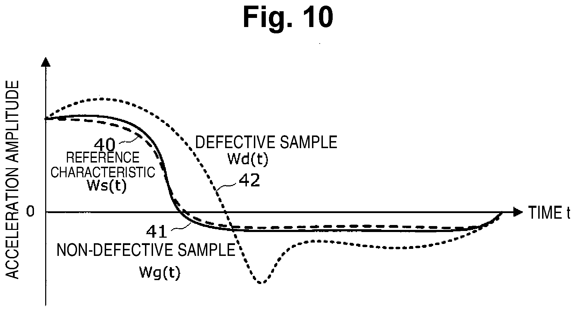

Fig. 10 is a graph illustrating the time response of the amplitude of acceleration. In Fig. 10, when characteristic data Wg(t) regarding the time response of the amplitude of acceleration of a non-defective sample is represented as a characteristic 41, the characteristic 41 appears as positive values for a certain period from a time 0 and afterward remains as a constant negative value. By contrast, when characteristic data Wd(t) regarding the time response of the amplitude of acceleration of a defective sample is represented as a characteristic 42, the characteristic 42 slightly rises from the time 0, then draws a falling arc to a negative peak, and afterward remains as a constant negative value. As such, the time response of the amplitude of acceleration significantly differs between the non-defective sample and the defective sample.

Thus, it is possible to check the quality of the inspection target BX by statistically processing the sample characteristic data D5 of non-defective samples, accordingly computing a representative value such as a mean or median value of the characteristic data Wg(t) of the non-defective sample group as a reference characteristic 40, that is, reference data Ws(t), and computing a feature Q indicating a match rate between the reference data Ws(t) and characteristic data W(t) of the inspection target BX. As a specific example of the feature Q, it is possible to use the residual sum of squares of the reference data Ws(t) and the characteristic data W(t) as expressed as the following expression (1).
[Math. 1]

$$Q = \sum_{t} \left( Ws(t) - W(t) \right)^2 \qquad \cdots (1)$$

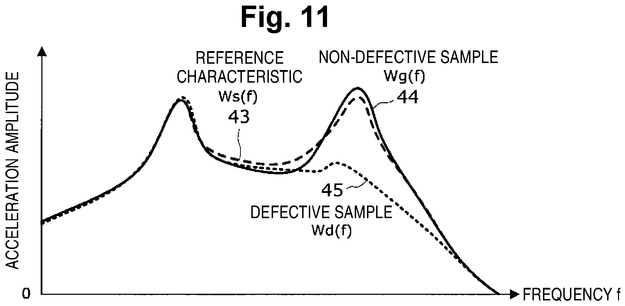

Fig. 11 is a graph illustrating the frequency response of the amplitude of acceleration. Referring to Fig. 11, when characteristic data Wg(f) regarding the frequency response of the amplitude of acceleration of a non-defective sample is represented as a characteristic 44, the characteristic 44 monotonically rises for a certain period from a frequency 0 to a first peak, then temporarily falls, rises again to a second peak, and afterward monotonically falls. By contrast, when characteristic data Wd(f) regarding the frequency response of the amplitude of acceleration of a defective sample is represented as a characteristic 45, the characteristic 45 draws arcs almost identical to the arcs of the characteristic 44 from the frequency 0 to a point immediately before the second peak, but afterward, the characteristic 44 draws a very small second peak and then monotonically falls. As such, the frequency response of the amplitude of acceleration significantly differs between the non-defective sample and the defective sample.

Thus, it is possible to check the quality of the inspection target BX by statistically processing the sample characteristic data D5 of non-defective samples, accordingly computing a representative value such as a mean or median value of the characteristic data Wg(f) of the non-defective sample group as a reference characteristic 43, that is, reference data Ws(f), and computing the feature Q indicating a match rate between the reference data Ws(f) and characteristic data W(f) of the inspection target BX. As a specific example of the feature Q, it is possible to use the residual sum of squares of the reference data Ws(f) and the characteristic data W(f) as expressed as the following expression (2).
[Math. 2]

$$Q = \sum_{f} \left( Ws(f) - W(f) \right)^2 \qquad \cdots (2)$$

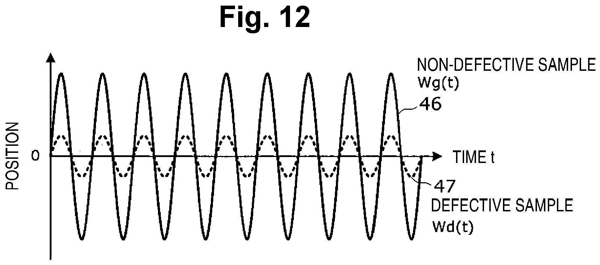

Fig. 12 is a graph illustrating the time response of the position. In Fig. 12, when the characteristic data Wg(f) regarding the time response of the position of a non-defective sample is represented as characteristic 46, the amplitude of the characteristic 46 is relatively large; when the characteristic data Wd(f) regarding the time response of the position of a defective sample is represented as a characteristic 47, the amplitude of the characteristic 47 is smaller than the amplitude of the non-defective sample. Hence, by computing a statistical value regarding the time response of the position such as a standard deviation or variance, it is possible to extract the feature Q of amplitude.

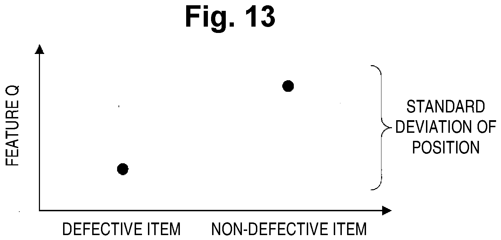

Fig. 13 is a graph indicating the standard deviation of the time response of the position. A standard deviation Sg of the time response Wg(f) of the position of a non-defective sample is larger than a standard deviation Sd of the time response Wd(f) of the position of a defective sample. Hence, these standard deviations Sg and Sd are obtained by using a plurality of samples, and a value between these standard deviations is determined as a reference feature Qs.

The feature Q may be a feature other than the residual sum of squares, such as a feature of skewness, consistency, similarity, proximity, or conformity. The feature Q may be extracted by using machine learning.

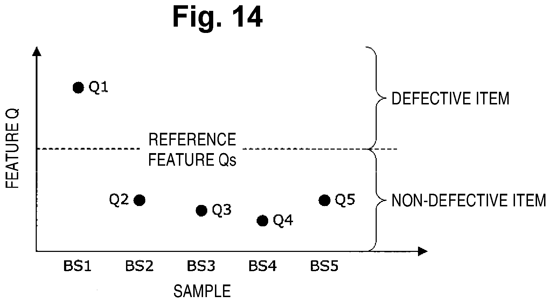

The determination of the quality of the inspection target BX by using the feature Q needs the reference feature D7, that is, Qs to process the feature Q in accordance with a threshold. Fig. 14 is a graph illustrating a distribution of features. When the features Q are computed for the samples BS1, BS2, BS3, BS4, and BS5 and a graph is accordingly generated as in Fig. 14, the distribution of these samples BS is divided into two groups of the non-defective item group and the defective item group with respect to the vertical axis indicating the feature Q. Hence, the reference feature Qs can be determined in consideration of the difference between the non-defective item group and the defective item group.

Next, referring to Fig. 4, the inspection apparatus 30A provides an instruction to cause the inspection target BX to generate a traction illusion (step 140). In response to this, the inspection apparatus 30A measures a characteristic signal S2 representing the traction illusion generated by the inspection target BX (step 141).

Subsequently, the inspection apparatus 30A generates, in accordance with the inspection result D8 based on the characteristic signal S2, the objective inspection target characteristic data D9 such as acceleration data, more specifically, data representing, for example, the time or frequency response of the amplitude of acceleration rate (step 142) and outputs the objective inspection target characteristic data D9 to the determination apparatus 30B (step 143).

Subsequently, the determination apparatus 30B computes, for each inspection target BX, a match rate between the inspection target characteristic data D9 of the inspection target BX and the reference data D6 obtained by the feature computation apparatus 20B as the inspection target feature Q of the inspection target BX (step 144).

The determination apparatus 30B then compares the inspection target feature Q of each inspection target BX and the reference feature D7, that is, Qs obtained by the feature computation apparatus 20B and determines the quality of operation of the inspection target BX in accordance with the obtained comparison result (step 145). The determination apparatus 30B displays the obtained determination result D10 by using the display circuit 36 (step 146) and ends the series of steps of the tactile device inspection operation.

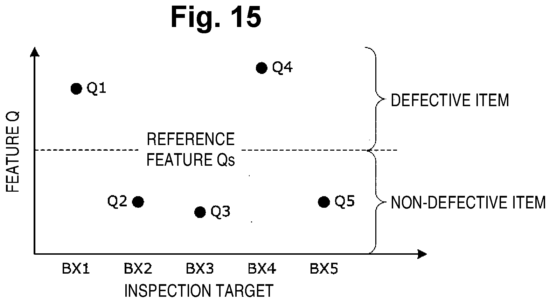

Fig. 15 is a graph illustrating the quality determination of inspection targets. When the inspection target features Q are obtained for inspection targets BX1, BX2, BX3, BX4, and BX5 and a graph is accordingly generated as in Fig. 15, the distribution of these inspection targets BX is divided into two groups with the reference feature Qs interposed between the two groups. At this time, the inspection target features Q2, Q3, and Q5 of the inspection targets BX2, BX3, and BX5 are distributed on the lower side with respect to the reference feature Qs; as a result, since the match rate between the inspection targets BX2, BX3, and BX5 and the reference data Ws(t) representing the non-defective item group is relatively high, the inspection targets BX2, BX3, and BX5 are determined as non-defective items. By contrast, the inspection target features Q1 and Q4 of the inspection targets BX1 and BX4 are distributed on the upper side with respect to the reference feature Qs; as a result, since the match rate between the inspection targets BX1 and BX4 and the reference data Ws(t) representing the non-defective item group is relatively low, the inspection targets BX1 and BX4 are determined as defective items.

[Effect of first embodiment]

As described above, the present embodiment is configured as described below. The test apparatus 10A obtains the test result D1 indicating a subjective evaluation result by a test subject with regard to a traction illusion generated by a prepared sample BS of the tactile device B. The quality check apparatus 10B checks the quality of the sample BS in accordance with the test result D1. The measurement apparatus 20A performs measurement processing to obtain the objective sample characteristic data D5 representing the traction illusion generated by the sample BS. The feature computation apparatus 20B computes the reference feature Qs(D7) to be used to determine quality of the inspection target BX of the tactile device B in accordance with the quality check result D3 indicating the quality of the sample BS and the sample characteristic data D5. The inspection apparatus 30A performs measurement processing to obtain the inspection target characteristic data D9 representing the traction illusion generated by the inspection target BX. The determination apparatus 30B computes, for each inspection target BX, the inspection target feature Q indicating a feature of the traction illusion generated by the inspection target BX in accordance with the obtained inspection target characteristic data D9. In accordance with a comparison result of the inspection target feature Q to the reference feature Qs, the quality of the inspection target BX is determined.

As such, by using the reference feature Qs previously computed, it is possible to objectively determine the quality of a manufactured item to be shipped out, that is, the inspection target BX of the tactile device B without evaluation based on personal views, and as a result, it is possible to maintain a consistent level of quality of manufactured items to be shipped out. Although the evaluations based on personal views of test subjects are necessary to compute the reference feature Qs, these evaluations are made by using only the prepared samples BS of the tactile device B. For this reason, it is necessary only to perform measurement processing to obtain the inspection target characteristic data D9 of the manufactured item to be shipped out, compute the inspection target feature Q, and compare the inspection target feature Q with the reference feature Qs, and thus, it is possible to automatize the inspection before shipping and greatly improve the efficiency of the inspection.

In the present embodiment, the quality check apparatus 10B may compute the correct answer rate D2 of each sample BS in accordance with corresponding subjective evaluation results included in the test result D1, compute the threshold Th for quality determination of the sample BS in accordance with the distribution of the obtained correct answer rates D2, and check the quality of the sample BS in accordance with a comparison result of the correct answer rate D2 of the sample BS to the threshold Th.

With this configuration, it is unnecessary to previously determine the quality of the sample BS in accordance with evaluations based on personal views, and as a result, the workload and time required for computing the reference feature D7 can be greatly reduced.

In the present embodiment, the two-alternative forced choice task may be used to carry out subjective evaluation results by the test subject Y with the use of the test apparatus 10A.

With this configuration, it is possible to greatly reduce the load and time required for quality check of the sample BS by using the quality check apparatus 10B.

In the present embodiment, the feature computation apparatus 20B may compute the reference data D6 as a criterion by statistically processing the sample characteristic data D5 of non-defective samples BS determined as non-defective items in the quality check result D3, compute, for each sample BS, a match rate between the sample characteristic data D5 of the sample BS and the reference data D6 as the sample feature Q of the sample BS, and compute the reference feature D7 in accordance with sample features of the non-defective samples and sample features of defective samples determined as defective items in the quality check result D3.

With this configuration, the feature computation apparatus 20B can highly accurately compute the reference feature D7.

In the present embodiment, as the sample characteristic data D5 and the inspection target characteristic data D9, data about the vibration strength of the tactile device B may be used. Specifically, data representing the time or frequency response of the vibration strength may be used.

With this configuration, as the feature to be used to determine quality, it is possible to compute a very suitable value representing the operation of the tactile device B generating a traction illusion by vibrations.

[Second embodiment]

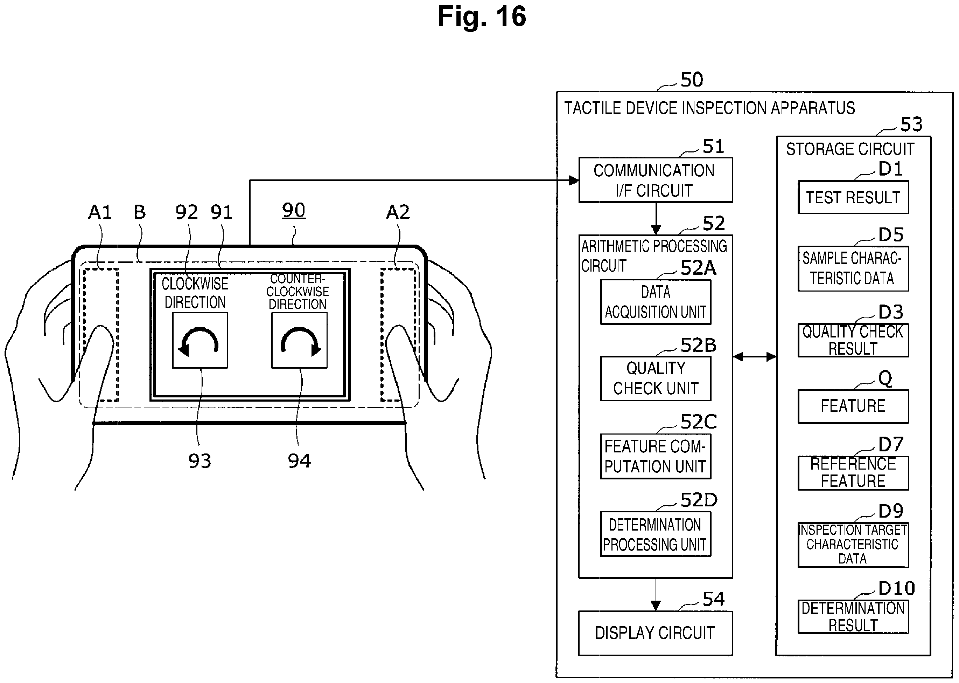

Next, a tactile device inspection system 2 according to a second embodiment of the present invention will be described with reference to Fig. 16. Fig. 16 is a block diagram illustrating a configuration of the tactile device inspection system according to the second embodiment.

As illustrated in Fig. 16, the tactile device inspection system 2 according to the present embodiment is constituted by a plurality of electronic devices 90 equipped with the tactile devices B and a single tactile device inspection apparatus 50. The present embodiment describes an example of configuration in which each electronic device 90 includes the test apparatus 10A, the measurement apparatus 20A, and the inspection apparatus 30A of the tactile device inspection system 1 according to the first embodiment.

[Tactile device and electronic device]

The tactile device B is built in the slim and small portable electronic device 90. Actuators A1 and A2 for generating traction illusions in the tactile device B are arranged at left and right grip portions of the electronic device 90. A screen display unit 91 and a touch panel 92 are provided at the center portion of the electronic device 90.

Operating buttons 93 and 94 are also arranged at the center portion of the electronic device 90. The operating buttons 93 and 94 are used to receive the answer operation D0 performed by the test subject Y in the subjective evaluation test of the tactile device B. The operating buttons 93 and 94 are configured as operation signs by using the screen display unit 91 and the touch panel 92 but key buttons for changing the position in up and down directions in accordance with operations may be used.

In the present embodiment, it is assumed that a two-alternative forced choice task is used for the evaluation test of the tactile device B by the test subject Y, in which the actuators A1 and A2 of the tactile device B generate an illusion of turning and pulling force in either one of the two directions of the clockwise and counterclockwise directions, and the test subject Y answers, by using the operating button 93 or 94, either one direction in which the test subject Y feels turned and pulled. For example, when the actuator A1 generates a traction illusion in a direction away from the test subject Y and the actuator A2 generates a traction illusion in a direction toward the test subject Y, an illusion of turning and pulling force is generated in the clockwise direction; when the traction illusions are generated in the reverse directions, an illusion of turning and pulling force is generated in the counterclockwise direction. The method of the evaluation test conducted by the test subject Y is basically identical to Fig. 2 described above, and detailed description thereof is omitted.

The electronic device 90 includes the test apparatus 10A, the measurement apparatus 20A, and the inspection apparatus 30A in Fig. 1. The electronic devices 90 thus performs a function of generating the test result D1 by collecting the answer operation D0 obtained in the evaluation test conducted by the test subject Y and sending the test result D1 to the tactile device inspection apparatus 50; the electronic devices 90 also performs a function of generating the objective sample characteristic data D5 such as acceleration data, more specifically, data representing, for example, the time or frequency response of the amplitude of acceleration rate by detecting vibrations causing a traction illusion generated in the evaluation test conducted by the test subject Y and sending the objective sample characteristic data D5 to the tactile device inspection apparatus 50. In the present embodiment, the sample BS and the inspection target BX are the same kind of tactile device B, and thus, the measurement apparatus 20A implements the function of the inspection apparatus 30A in actual application.

In the present embodiment, of the electronic devices 90, an electronic device 90 prepared as a sample to compute a reference feature to be used to determine quality is referred to as an electronic device 90S; the tactile device B built in the electronic device 90S corresponds to the sample BS. Additionally, an electronic device 90 targeted for actual inspection is referred to as an electronic device 90X; the tactile device B built in the electronic device 90X corresponds to the inspection target BX.

[Tactile device inspection apparatus]

As illustrated in Fig. 16, the tactile device inspection apparatus 50 is overall constituted by a server apparatus and an information processing apparatus such as a PC; and the tactile device inspection apparatus 50 includes, as main components, a communication I/F circuit 51, an arithmetic processing circuit 52, a storage circuit 53, and a display circuit 54.

The communication I/F circuit 51 performs a function of receiving the test result D1, the sample characteristic data D5, and the inspection target characteristic data D9 from the electronic devices 90 by communicating with the electronic devices 90 with or without wire connections to receive data.

The arithmetic processing circuit 52 includes a C reference feature U and a peripheral circuit. The arithmetic processing circuit 52 performs a function of implementing, by using the C reference feature U running a pre-installed program, various processing units for checking the quality of the tactile device B.

Main processing units implemented by the arithmetic processing circuit 52 are a data acquisition unit 52A, a quality check unit 52B, a feature computation unit 52C, and a determination processing unit 52D.

The data acquisition unit 52A performs a function of obtaining the test result D1 and the objective sample characteristic data D5 from the electronic device 90S serving as a sample by communicating with the electronic device 90S via the communication I/F circuit 51 to obtain data and storing the test result D1 and the objective sample characteristic data D5 in the storage circuit 53. The data acquisition unit 52A also performs a function of obtaining the objective inspection target characteristic data D9 from the electronic device 90X targeted for inspection by communicating with the electronic device 90X via the communication I/F circuit 51 to obtain data and storing the objective inspection target characteristic data D9 in the storage circuit 53.

The quality check unit 52B performs a function of checking the quality of the sample BS in accordance with the test result D1 in the storage circuit 53 and storing the obtained quality check result D3 in the storage circuit 53.

The feature computation unit 52C corresponds to the feature computation apparatus 20B in Fig. 1. The feature computation unit 52C thus performs a function of computing the reference feature Q (D7) to be used to determine quality of the inspection target BX in accordance with the quality check result D3 and the sample characteristic data D5 in the storage circuit 53 and storing the reference feature Q (D7) in the storage circuit 53.

The determination processing unit 52D corresponds to the determination apparatus 30B in Fig. 1. The determination processing unit 52D thus performs a function of computing, for each inspection target BX, the feature Q indicating a feature of a traction illusion generated by the inspection target BX in accordance with the inspection target characteristic data D9 in the storage circuit 53, determining the quality of the inspection target BX in accordance with a comparison result of the feature Q to the reference feature D7 in the storage circuit 53, and storing the obtained determination result D10 in the storage circuit 53.

The storage circuit 53 is constituted by a storage device, such as a hard disk or a semiconductor memory. The storage circuit 53 performs a function of storing the various kinds of processing data and program used to check the quality of the tactile device. The program is read beforehand from an external device or storage medium (both not illustrated in the drawing) coupled to the tactile device inspection apparatus 50 and stored in the storage circuit 53.

The display circuit 54 performs a function of displaying the determination result D10 indicating the quality of each inspection target BX (electronic device 90) obtained by the arithmetic processing circuit 52 by using a display device such as an LCD or LED display.

[Operation of second embodiment]

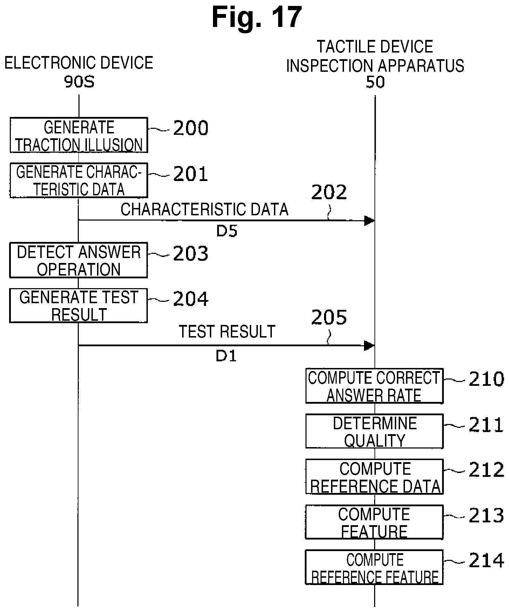

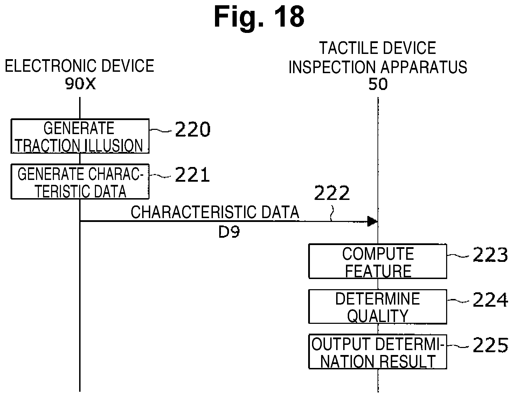

Next, an operation of the tactile device inspection system 2 according to the present embodiment will be described with reference to Figs. 17 and 18. Fig. 17 is a sequence diagram illustrating a reference feature computation operation according to the second embodiment. Fig. 18 is a sequence diagram illustrating a tactile device inspection operation according to the second embodiment.

The operation of the tactile device inspection system 2 according to the present embodiment is basically identical to Fig. 3. The electronic device 90 carries out the steps relating to the test apparatus 10A, the measurement apparatus 20A, and the inspection apparatus 30A. The tactile device inspection apparatus 50 carries out the steps relating to the quality check apparatus 10B, the feature computation apparatus 20B, and the determination apparatus 30B.

Firstly, referring to Fig. 17, the electronic device 90S serving as a sample causes the built-in tactile device B to generate a traction illusion (step 200). The electronic device 90S then generates, in accordance with the measurement result D4 obtained by measuring vibrations of the traction illusion, the objective sample characteristic data D5 such as acceleration data, more specifically, data representing, for example, the time or frequency response of the amplitude of acceleration rate (step 201) and sends the objective sample characteristic data D5 to the tactile device inspection apparatus 50 (step 202).

The electronic device 90S detects, by using the operating buttons 93 and 94, the answer operation D0 of the test subject Y indicating a subjective evaluation result of the traction illusion generated by the built-in tactile device B (step 203), generates the test result D1 by collecting the detected answer operation D0 (step 204), and sends the test result D1 to the tactile device inspection apparatus 50 (step 205).

These steps 200 to 205 are repeated for the individual electronic devices 90S of the tactile devices B targeted for inspection and also for the individual test subjects Y.

The tactile device inspection apparatus 50 computes the correct answer rate D2 for each sample BS in accordance with whether a particular traction illusion generated by the sample BS matches a subjective evaluation result of the particular traction illusion carried out by the test subject Y, that is, the answer operation D0, which are included in the test result D1 obtained by each electronic device 90S (step 210).

The tactile device inspection apparatus 50 determines a threshold for quality determination by statistically processing the computed correct answer rates D2 of the respective samples BS and generates the quality check result D3 with respect to each sample BS by processing the correct answer rate D2 of the sample BS in accordance with the determined threshold and accordingly checking the quality of the sample BS (step 211).

Next, the tactile device inspection apparatus 50 computes the reference data D6 by statistically processing the sample characteristic data D5 of non-defective devices determined as non-defective items in the quality check result D3 out of the sample characteristic data D5 received from the electronic devices 90S (step 212).

Subsequently, the tactile device inspection apparatus 50 computes, for each sample BS, a match rate between the sample characteristic data D5 of the sample BS and the reference data D6 as the sample feature Q of the sample BS (step 213). The tactile device inspection apparatus 50 computes the reference feature D7 in accordance with the sample features of the non-defective devices and the sample features of defective devices determined as defective items in the quality check result D3 (step 214).

After this, referring to Fig. 18, when the quality of the electronic device 90X targeted for inspection is checked, the electronic device 90X targeted for inspection causes the built-in inspection target BX to generate a traction illusion (step 220). The electronic device 90X then generates, in accordance with the measurement result D4 obtained by measuring vibrations of the traction illusion, the objective inspection target characteristic data D9 such as acceleration data, more specifically, data representing, for example, the time or frequency response of the amplitude of acceleration rate (step 221) and sends the inspection target characteristic data D9 to the tactile device inspection apparatus 50 (step 222).

The tactile device inspection apparatus 50 computes, for each electronic device 90X, the inspection target feature Q of the inspection target BX of the electronic device 90X (step 223). The tactile device inspection apparatus 50 then determines the quality of operation of the inspection target BX in accordance with a comparison result of the inspection target feature Q to the reference feature D7 previously computed, that is, Qs (step 224), displays the obtained determination result D10 by using the display circuit 54 (step 225), and ends the series of steps of the tactile device inspection operation.

[Effect of second embodiment]

As described above, in the present embodiment, each electronic device 90 includes the test apparatus 10A, the measurement apparatus 20A, and the inspection apparatus 30A of the tactile device inspection system 1 in Fig. 1. In the present embodiment, the test result D1 indicating subjective evaluation results made by test subjects and the objective sample characteristic data D5 representing traction illusions are obtained from the electronic devices 90S prepared as samples. Accordingly, the tactile device inspection apparatus 50 shared by the electronic devices 90S computes the reference feature D7 in accordance with the test result D1 and the sample characteristic data D5 obtained from the electronic devices 90S. In the present embodiment, in accordance with a comparison result of an inspection target feature of the electronic device 90X targeted for inspection, which is computed in accordance with the sample characteristic data D5 obtained from the electronic device 90X, to the reference feature D7, the quality of the tactile device B built in the electronic device 90X is determined.

More specifically, the present embodiment is configured as described below. In the arithmetic processing circuit 52 of the tactile device inspection apparatus 50, the data acquisition unit 52A obtains, from the prepared sample BS of the tactile device B, the test result D1 indicating a subjective evaluation result made by the test subject Y with respect to a traction illusion generated by the sample BS and the objective sample characteristic data D5 representing the traction illusion and also obtains, from the inspection target BX of the tactile device B targeted for inspection, the objective inspection target characteristic data D9 representing a traction illusion generated by the inspection target BX. The quality check unit 52B checks the quality of the sample BS in accordance with the test result D1. In accordance with the quality check result D3 indicating the quality of the sample BS and the sample characteristic data D5, the feature computation unit 52C computes the reference feature Qs to be used to determine quality of the inspection target BX. The determination processing unit 52D computes, for each inspection target BX, the inspection target feature Q indicating a feature of a traction illusion generated by the inspection target BX in accordance with the inspection target characteristic data D9 and determines the quality of the inspection target BX in accordance with a comparison result of the inspection target feature Q to the reference feature Qs.

With this configuration, it is possible to individually use the test result D1 and the sample characteristic data D5 that are obtained by the respective electronic devices 90S serving as samples in parallel for each of the electronic devices 90S, and as a result, it is possible to greatly reduce the operating time required for the subjective evaluation test conducted by the test subject Y.

[Extension of embodiments]

The present invention has been described above in accordance with the embodiments, but the present invention is not limited to the embodiments described above. Various modifications to the configurations and details of the present invention, which are readily understood by those skilled in the art, may be made without departing from the scope of the invention as defined in the appended claims.

Reference Signs List

| | |
|---|---|
| 1, 2 | Tactile device inspection system |
| 10A | Test apparatus |
| 10B | Quality check apparatus |
| 11 | Drive circuit |
| 12 | Operational input circuit |
| 13 | Test control circuit |
| 15 | Correct answer rate computation circuit |
| 16 | Quality check circuit |
| 20A | Measurement apparatus |
| 20B | Feature computation apparatus |
| 21 | Drive circuit |
| 22 | Measurement circuit |
| 23 | Measurement control circuit |
| 25 | Reference data computation circuit |
| 26 | Feature computation circuit |
| 30A | Inspection apparatus |
| 30B | Determination apparatus |
| 31 | Drive circuit |
| 32 | Measurement circuit |
| 33 | Inspection control circuit |
| 35 | Determination processing circuit |
| 36 | Display circuit |
| 50 | Tactile device inspection apparatus |
| 51 | Communication I/F circuit |
| 52 | Arithmetic processing circuit |
| 52A | Data acquisition unit |
| 52B | Quality check unit |
| 52C | Feature computation unit |
| 52D | Determination processing unit |
| 53 | Storage circuit |
| 54 | Display circuit |
| 90, 90S, 90X | Electronic device |
| 91 | Screen display unit |
| 92 | Touch panel |
| 93, 94 | Operating button |
| A1, A2 | Actuator |
| B | Tactile device |
| BS | Sample |
| BX | Inspection target |
| D1 | Test result |
| D2 | Correct answer rate |
| D3 | Quality check result |
| D4 | Measurement result |
| D5 | Sample characteristic data |
| D6 | Reference data |
| D7 | Reference feature |
| D8 | Inspection result |
| D9 | Inspection target characteristic data |

D10       Determination result.

**Claims**

1. A tactile device inspection system (1) for determining quality of tactile devices each configured to generate a traction illusion by vibrations, the tactile device inspection system comprising:

   a test apparatus (10A) configured to obtain a test result (D1) indicating a subjective evaluation of a subject with respect to a traction illusion generated by a sample (BS) of the tactile devices prepared beforehand, wherein the subjective evaluation is based on a two-alternative forced choice task;
   a quality check apparatus (10B) configured to check quality of the sample (BS) in accordance with the test result so as to generate a quality check result (D3) indicating the quality of the sample, wherein the sample is determined as a defective item or a non-defective item in the quality check result;
   a measurement apparatus (20A) configured to perform measurement processing to obtain objective sample characteristic data (D5) representing the traction illusion generated by the sample (BS);
   **characterized by**:

   a feature computation apparatus (20B) configured to (i) compute reference data (D6) representing non-defective samples determined as non-defective items in the quality check result (D3), by statistically processing the sample characteristic data (D5) of the non-defective samples among a plurality of samples of the tactile devices prepared beforehand, (ii) compute, for each sample of the defective and non-defective samples, a match rate between the sample characteristic data (D5) of the respective sample and the reference data (D6) as a sample feature of the sample, and (iii) compute a reference feature (D7) to be used to determine quality of an inspection target (BX) of the tactile devices other than the sample (BS) in accordance with the sample features of the non-defective samples determined as non-defective items in the quality check result (D3) and the sample features of defective samples determined as defective items in the quality check result (D3);
   an inspection apparatus (30A) configured to perform measurement processing to obtain objective inspection target characteristic data (D9) representing a traction illusion generated by the inspection target (BX), wherein the sample characteristic data and the inspection target characteristic data relate to speed, acceleration rate, position, or force of the tactile device, or any combination of speed, acceleration rate, position, and force of the tactile device, and
   a determination apparatus (30B) configured to compute for each inspection target, as an inspection target feature, a match rate between the obtained inspection target characteristic data (D9) and the reference data (D6), and determine quality of the inspection target (BX) in accordance with a comparison result of the inspection target feature to the reference feature (D7).

2. The tactile device inspection system according to claim 1, wherein
   the quality check apparatus (10B) is configured to compute a correct answer rate (D2) in accordance with the subjective evaluation included in the test result, and check the quality of the sample in accordance with a comparison result of the correct answer rate of the sample to a threshold determined by using a distribution of the correct answer rates of the respective samples.

3. The tactile device inspection system according to claim 1, wherein
   the sample characteristic data (D5) and the inspection target characteristic data (D9) relate to time response with respect to speed, acceleration rate, position, or force of the tactile device, or any combination of speed, acceleration rate, position, and force of the tactile device.

4. The tactile device inspection system according to claim 1, wherein
   the sample characteristic data (D5) and the inspection target characteristic data (D9) relate to frequency response with respect to speed, position, or force of the tactile device, or any combination of speed, position, and force of the tactile device.

5. A tactile device inspection method of determining quality of tactile devices each configured to generate a traction illusion by vibrations, the tactile device inspection method comprising:

   a test step of obtaining a test result (D1) indicating a subjective evaluation of a subject with respect to a traction illusion generated by a sample (BS) of the tactile devices prepared beforehand, wherein the subjective evaluation is based on a two-alternative forced choice task;
   a quality check step of checking quality of the sample (BS) in accordance with the test result so as to generate a quality check result (D3) indicating the quality of the sample, wherein the sample is determined as a defective item or a non-defective item in the quality check result; a measurement step of performing measurement processing to obtain objective sample characteristic data (D5) representing the traction illusion generated by the sample (BS); **characterized by** the following steps:

a feature computation step comprising (i) computing reference data (D6) representing non-defective samples determined as non-defective items in the quality check result (D3), by statistically processing the sample characteristic data (D5) of the non-defective samples among a plurality of samples of the tactile devices prepared beforehand, (ii) computing, for each sample of the defective and non-defective samples, a match rate between the sample characteristic data (D5) of the respective sample and the reference data (D6) as a sample feature of the sample, and (iii) computing a reference feature (D7) to be used to determine quality of an inspection target (BX) of the tactile devices other than the sample (BS) in accordance with the sample features of the non-defective samples determined as non-defective items in the quality check result (D3) and the sample features of defective samples determined as defective items in the quality check result (D3); an inspection step of performing measurement processing to obtain objective inspection target characteristic data (D9) representing a traction illusion generated by the inspection target (BX), wherein the sample characteristic data and the inspection target characteristic data relate to speed, acceleration rate, position, or force of the tactile device, or any combination of speed, acceleration rate, position, and force of the tactile device; and a determination step of computing for each inspection target, as an inspection target feature, a match rate between the obtained inspection target characteristic data (D9) and the reference data (D6), and determining quality of the inspection target (BX) in accordance with a comparison result of the inspection target feature to the reference feature (D7).

**Patentansprüche**

1. Taktiles Vorrichtungsprüfsystem (1) für ein Bestimmen einer Qualität von taktilen Vorrichtungen, die jeweils konfiguriert sind, um eine Traktionsillusion durch Vibrationen zu erzeugen, wobei das taktile Vorrichtungsprüfsystem umfasst:

eine Testvorrichtung (10A), die konfiguriert ist, um ein Testergebnis (D1) zu erhalten, das eine subjektive Bewertung eines Probanden in Bezug auf eine durch eine Probe (BS) der taktilen Vorrichtungen erzeugte Traktionsillusion angibt, die zuvor vorbereitet wurde, wobei die subjektive Bewertung auf einer Aufgabe mit zwei alternativen Wahlmöglichkeiten basiert; eine Qualitätsprüfvorrichtung (10B), die konfiguriert ist, um eine Qualität der Probe (BS) in Übereinstimmung mit dem Testergebnis zu prüfen, um so ein Qualitätsprüfergebnis (D3) zu erzeugen, das die Qualität der Probe angibt, wobei die Probe als ein fehlerhaftes Element oder ein nicht fehlerhaftes Element bestimmt wird; eine Messvorrichtung (20A), die konfiguriert ist, um eine Messverarbeitung durchzuführen, um objektive Probencharakteristikdaten (D5) zu erhalten, die die durch die Probe (BS) erzeugte Traktionsillusion darstellen; **gekennzeichnet durch**:

eine Merkmalsberechnungsvorrichtung (20B), die konfiguriert ist, um

(i) Referenzdaten (D6), die nicht fehlerhafte Elemente darstellen, die im Qualitätsprüfungsergebnis (D3) als nicht fehlerhafte Elemente bestimmt wurden, durch statistisches Durchführen der Probencharakteristikdaten (D5) der nicht fehlerhaften Proben aus einer Vielzahl von Proben der taktilen Vorrichtungen, die zuvor vorbereitet wurden, zu berechnen, (ii) für jede Probe der fehlerhaften und nicht fehlerhaften Proben eine Übereinstimmungsrate zwischen den Probencharakteristikdaten (D5) der jeweiligen Probe und den Referenzdaten (D6) als ein Probenmerkmal der Probe zu berechnen, und (iii) ein Referenzmerkmal (D7) zu berechnen, das verwendet wird, um eine Qualität eines Prüfziels (BX) der taktilen Vorrichtungen, die nicht die Probe (BS) ist, in Übereinstimmung mit den Probenmerkmalen der nicht fehlerhaften Proben, die als nicht fehlerhafte Elemente im Qualitätsprüfungsergebnis (D3) bestimmt wurden, und den Probenmerkmalen der fehlerhaften Proben, die als fehlerhaftes Elemente im Qualitätsprüfungsergebnis (D3) bestimmt wurden, zu bestimmen;

eine Prüfvorrichtung (30A), die konfiguriert ist, um eine Messverarbeitung durchzuführen, um objektive Prüfzielcharakteristikdaten (D9) zu erhalten, die eine durch das Prüfziel (BX) erzeugte Traktionsillusion darstellen, wobei die Probencharakteristikdaten und die Prüfzielcharakteristikdaten sich auf Geschwindigkeit, Beschleunigungsrate, Position oder Kraft der taktilen Vorrichtung oder eine beliebige Kombination aus Geschwindigkeit, Beschleunigungsrate, Position und Kraft der taktilen Vorrichtung beziehen, und

eine Bestimmungsvorrichtung (30B), die konfiguriert ist, um für jedes Prüfziel, als ein Prüfzielmerkmal, eine Übereinstimmungsrate zwischen den erhaltenen Prüfzielcharakteristikdaten (D9) und den Referenzdaten (D6) zu berechnen und eine Qualität des Prüfziels (BX) in Übereinstimmung mit einem Vergleichsergebnis des Prüfzielmerkmals mit dem Referenzmerkmal (D7) zu bestimmen.

2. Taktiles Vorrichtungsprüfsystem nach Anspruch 1, wobei
die Qualitätsprüfvorrichtung (10B) konfiguriert ist, um eine korrekte Antwortrate (D2) in Übereinstimmung mit der im Testergebnis enthaltenen subjektiven Bewertung zu berechnen und die Qualität der Probe in Übereinstimmung mit einem Vergleichsergebnis der korrekten Antwortrate der Probe mit einem Schwellenwert zu überprüfen, der unter Verwendung einer Verteilung der korrekten Antwortraten der jeweiligen Proben bestimmt wird.

3. Taktiles Vorrichtungsprüfsystem nach Anspruch 1, wobei
die Probencharakteristikdaten (D5) und die Prüfzielcharakteristikdaten (D9) sich auf ein Zeitreaktion in Bezug auf Geschwindigkeit, Beschleunigungsrate, Position oder Kraft der taktilen Vorrichtung oder eine beliebige Kombination von Geschwindigkeit, Beschleunigungsrate, Position und Kraft der taktilen Vorrichtung beziehen.

4. Taktiles Vorrichtungsprüfsystem nach Anspruch 1, wobei
die Probencharakteristikdaten (D5) und die Prüfzielcharakteristikdaten (D9) sich auf eine Frequenzantwort in Bezug auf Geschwindigkeit, Position oder Kraft der taktilen Vorrichtung oder eine beliebige Kombination aus Geschwindigkeit, Position und Kraft der taktilen Vorrichtung beziehen.

5. Verfahren zur Prüfung einer taktilen Vorrichtung zur Bestimmung einer Qualität von taktilen Vorrichtungen, die jeweils konfiguriert sind, um eine Traktionsillusion durch Vibrationen zu erzeugen, das Verfahren zur Prüfung der taktilen Vorrichtung umfasst:

einen Testschritt zum Erhalten eines Testergebnisses (D1), das eine subjektive Bewertung eines Probanden in Bezug auf eine Traktionsillusion angibt, die durch eine Probe (BS) der taktilen Vorrichtungen erzeugt wird, die zuvor vorbereitet wurde, wobei die subjektive Bewertung auf einer Aufgabe mit zwei alternativen Wahlmöglichkeiten basiert;
einen Qualitätsprüfschritt zum Prüfen einer Qualität der Probe (BS) in Übereinstimmung mit dem Testergebnis, um ein Qualitätsprüfergebnis (D3) zu erzeugen, das die Qualität der Probe angibt, wobei die Probe in dem Qualitätsprüfergebnis als fehlerhaftes Element oder als nicht fehlerhaftes Element bestimmt wird;
einen Messschritt zum Durchführen einer Messverarbeitung, um objektive Probencharakteristikdaten (D5) zu erhalten, die die durch die Probe (BS) erzeugte Traktionsillusion darstellen;
**gekennzeichnet durch** die folgenden Schritte:

einen Merkmalsberechnungsschritt, umfassend

(i) Berechnen von Referenzdaten (D6), die nicht fehlerhafte Proben darstellen, die als nichtfehlerhafte Elemente im Qualitätsprüfungsergebnis (D3) bestimmt wurden, durch statistisches Verarbeiten der Probencharakteristikdaten (D5) der nicht fehlerhaften Proben unter einer Vielzahl von Proben der taktilen Vorrichtungen, die zuvor vorbereitet wurden,
(ii) Berechnen einer Übereinstimmungsrate zwischen den Probencharakteristikdaten (D5) der jeweiligen Probe und den Referenzdaten (D6) als ein Probenmerkmal der Probe für jede Probe der fehlerhaften und nicht fehlerhaften Proben, und
(iii) Berechnen eines Referenzmerkmals (D7), das verwendet wird, um eine Qualität eines Prüfziels (BX) der taktilen Vorrichtungen, die nicht die Probe (BS) ist, in Übereinstimmung mit den Probenmerkmalen der nicht fehlerhaften Proben, die als nicht fehlerhafte Elemente im Qualitätsprüfungsergebnis (D3) bestimmt wurden, und den Probenmerkmalen der fehlerhaften Proben, die als fehlerhafte Elemente im Qualitätsprüfungsergebnis (D3) bestimmt wurden, zu bestimmen;

einen Inspektionsschritt zum Durchführen einer Messverarbeitung, um objektive Prüfzielcharakteristikdaten (D9) zu erhalten, die eine durch das Prüfziel (BX) erzeugte Traktionsillusion darstellen, wobei die Probencharakteristikdaten und die Prüfzielcharakteristikdaten sich auf Geschwindigkeit, Beschleunigungsrate, Position oder Kraft der taktilen Vorrichtung oder eine beliebige Kombination aus Geschwindigkeit, Beschleunigungsrate, Position und Kraft der taktilen Vorrichtung beziehen; und

einen Bestimmungsschritt, bei dem für jedes Prüfziel, als Prüfzielmerkmal, eine Übereinstimmungsrate zwischen den erhaltenen Prüfzielcharakteristikdaten (D9) und den Referenzdaten (D6) berechnet und eine Qualität des Prüfziels (BX) in Übereinstimmung mit einem Vergleichsergebnis des Prüfzielmerkmals mit dem Referenzmerkmal (D7) bestimmt.

## Revendications

1. Système d'inspection de dispositif tactile (1) permettant de déterminer une qualité de dispositifs tactiles chacun configurés pour générer une illusion de traction par des vibrations, le système d'inspection de dispositif tactile comprenant :

un appareil de test (10A) configuré pour obtenir un résultat de test (D1) indiquant une évaluation subjective d'un sujet par rapport à une illusion de traction générée par un échantillon (BS) des dispositifs tactiles préparés à l'avance, dans lequel l'évaluation subjective est basée sur une tâche de choix forcé à deux alternatives ;
un appareil de contrôle qualité (10B) configuré pour contrôler la qualité de l'échantillon (BS) en fonction du résultat de test de manière à générer un résultat de contrôle qualité (D3) indiquant la qualité de l'échantillon, dans lequel l'échantillon est déterminé en tant qu'article défectueux ou article non défectueux dans le résultat de contrôle qualité ;
un appareil de mesure (20A) configuré pour réaliser un traitement de mesure pour obtenir des données de caractéristiques d'échantillon objectives (D5) représentant l'illusion de traction générée par l'échantillon (BS) ;
**caractérisé par** :

un appareil de calcul de valeurs caractéristiques (20B) configuré pour (i) calculer des données de référence (D6) représentant des échantillons non défectueux déterminés en tant qu'articles non défectueux dans le résultat de contrôle qualité (D3), en traitant statistiquement les données de caractéristiques d'échantillon (D5) des échantillons non défectueux parmi une pluralité d'échantillons des dispositifs tactiles préparés à l'avance, (ii) calculer, pour chaque échantillon des échantillons défectueux et non défectueux, un taux d'appariement entre les données de caractéristiques d'échantillon (D5) de l'échantillon respectif et les données de référence (D6) en tant que valeur caractéristique d'échantillon de l'échantillon, et (iii) calculer une valeur caractéristique de référence (D7) devant être utilisée pour déterminer une qualité d'une cible d'inspection (BX) des dispositifs tactiles autres que l'échantillon (BS) en fonction des valeurs caractéristiques d'échantillon des échantillons non défectueux déterminés en tant qu'articles non défectueux dans le résultat de contrôle qualité (D3) et des valeurs caractéristiques d'échantillon d'échantillons défectueux déterminés en tant qu'articles défectueux dans le résultat de contrôle qualité (D3) ;
un appareil d'inspection (30A) configuré pour réaliser un traitement de mesure pour obtenir des données de caractéristiques de cible d'inspection objectives (D9) représentant une illusion de traction générée par la cible d'inspection (BX), dans lequel les données de caractéristiques d'échantillon et les données de caractéristiques de cible d'inspection se rapportent à la vitesse, au taux d'accélération, à la position, ou à la force du dispositif tactile, ou à toute combinaison de vitesse, de taux d'accélération, de position, et de force du dispositif tactile, et
un appareil de détermination (30B) configuré pour calculer pour chaque cible d'inspection, en tant que valeur caractéristique de cible d'inspection, un taux d'appariement entre les données de caractéristiques de cible d'inspection obtenues (D9) et les données de référence (D6), et déterminer la qualité de la cible d'inspection (BX) en fonction d'un résultat de comparaison de la valeur caractéristique de cible d'inspection à la valeur caractéristique de référence (D7).

2. Système d'inspection de dispositif tactile selon la revendication 1, dans lequel
l'appareil de contrôle qualité (10B) est configuré pour calculer un taux de réponses correctes (D2) en fonction de l'évaluation subjective incluse dans le résultat de test, et contrôler la qualité de l'échantillon en fonction d'un résultat de comparaison du taux de réponses correctes de l'échantillon à un seuil déterminé à l'aide d'une distribution des taux de réponses correctes des échantillons respectifs.

3. Système d'inspection de dispositif tactile selon la revendication 1, dans lequel
les données de caractéristiques d'échantillon (D5) et les données de caractéristiques de cible d'inspection (D9) se rapportent au temps de réponse par rapport à la vitesse, au taux d'accélération, à la position, ou à la force du dispositif tactile, ou à une quelconque combinaison de vitesse, de taux d'accélération, de position, et de force du dispositif tactile.

4. Système d'inspection de dispositif tactile selon la revendication 1, dans lequel
les données de caractéristiques d'échantillon (D5) et les données de caractéristiques de cible d'inspection (D9) se rapportent à la réponse de fréquence par rapport à la vitesse, à la position, ou à la force du dispositif tactile, ou à une quelconque combinaison de vitesse, de position, et de force du dispositif tactile.

5. Procédé d'inspection de dispositif tactile consistant à déterminer une qualité de dispositifs tactiles chacun configurés pour générer une illusion de traction par des vibrations, le procédé d'inspection de dispositif tactile comprenant :

une étape de test consistant à obtenir un résultat de test (D1) indiquant une évaluation subjective d'un sujet par rapport à une illusion de traction générée par un échantillon (BS) des dispositifs tactiles préparés à l'avance, dans lequel l'évaluation subjective est basée sur une tâche de choix forcé à deux alternatives ;
une étape de contrôle qualité consistant à contrôler la qualité de l'échantillon (BS) en fonction du résultat de test de manière à générer un résultat de contrôle qualité (D3) indiquant la qualité de l'échantillon, dans lequel l'échantillon est déterminé en tant qu'article défectueux ou article non défectueux dans le résultat de contrôle qualité ;
une étape de mesure consistant à réaliser un traitement de mesure pour obtenir des données de caractéristiques d'échantillon objectives (D5) représentant l'illusion de traction générée par l'échantillon (BS) ;
**caractérisé par** les étapes suivantes :

une étape de calcul de valeur caractéristique comprenant (i) le calcul de données de référence (D6) représentant des échantillons non défectueux déterminés en tant qu'articles non défectueux dans le résultat de contrôle qualité (D3), en traitant statistiquement les données de caractéristiques d'échantillon (D5) des échantillons non défectueux parmi une pluralité d'échantillons des dispositifs tactiles préparés à l'avance, (ii) le calcul, pour chaque échantillon des échantillons défectueux et non défectueux, d'un taux d'appariement entre les données de caractéristiques d'échantillon (D5) de l'échantillon respectif et les données de référence (D6) en tant que valeur caractéristique d'échantillon de l'échantillon, et (iii) le calcul d'une valeur caractéristique de référence (D7) devant être utilisée pour déterminer une qualité de la cible d'inspection (BX) des dispositifs tactiles autres que l'échantillon (BS) en fonction des valeurs caractéristiques d'échantillon des échantillons non défectueux déterminés en tant qu'articles non défectueux dans le résultat de contrôle qualité (D3) et les valeurs caractéristiques d'échantillon d'échantillons défectueux déterminés en tant qu'articles défectueux dans le résultat de contrôle qualité (D3) ;
une étape d'inspection consistant à réaliser un traitement de mesure pour obtenir des données de caractéristiques de cible d'inspection objectives (D9) représentant une illusion de traction générée par la cible d'inspection (BX), dans lequel les données de caractéristiques d'échantillon et les données de caractéristiques de cible d'inspection se rapportent à la vitesse, au taux d'accélération, à la position, ou à la force du dispositif tactile, ou à une quelconque combinaison de vitesse, de taux d'accélération, de position, et de force du dispositif tactile ; et
une étape de détermination consistant à calculer pour chaque cible d'inspection, en tant que valeur caractéristique de cible d'inspection, un taux d'appariement entre les données de caractéristiques de cible d'inspection obtenues (D9) et les données de référence (D6), et à déterminer une qualité de la cible d'inspection (BX) en fonction d'un résultat de comparaison de la valeur caractéristique de cible d'inspection à la valeur caractéristique de référence (D7).

# Fig. 1

# Fig. 2

REPEAT OPERATIONS BY USING DIFFERENT TEST SUBJECTS 100

PREPARE TEST
EQUIPMENT
PREPARE SAMPLES
SELECT TEST
SUBJECT

101

EXPLAIN TEST
METHOD TO
TEST SUBJECT

102

REPEAT OPERATIONS BY
USING DIFFERENT SAMPLES 103

PROVIDE TEST SUBJECT WITH TEST ITEMS
· SAMPLE
· EARMUFFS
· BLINDFOLD

104

REPEAT OPERATIONS WHILE
CHANGING STRENGTH AND
DIRECTION

105

OPERATE
SAMPLE

106

RECEIVE ANSWER
ABOUT DIRECTION
OF PULLING FORCE

107

## Fig. 3

EP 3 951 346 B1

# Fig. 4

| INSPECTION TARGET BX | INSPECTION APPARATUS 30A | DETERMINATION APPARATUS 30B |
|---|---|---|

140 PROVIDE INSTRUCTION FOR GENERATION

GENERATE TRACTION ILLUSION

141 CHARACTERISTIC SIGNAL S2

GENERATE CHARACTERISTIC DATA — 142

143 CHARACTERISTIC DATA D9

144 — COMPUTE FEATURE

145 — DETERMINE QUALITY

146 — OUTPUT DETERMINATION RESULT

# Fig. 5

| SAMPLE | CORRECT ANSWER COUNT [ITEM] (TEST COUNT N) | | | CORRECT ANSWER RATE [%] P=M/N |
|---|---|---|---|---|
| | RIGHT DIRECTION (10) | LEFT DIRECTION (10) | CORRECT ANSWER TOTAL COUNT M | |
| BS1 | 5 | 5 | 10 | 50 |
| BS2 | 9 | 7 | 18 | 90 |
| BS3 | 8 | 7 | 17 | 85 |
| BS4 | 8 | 7 | 18 | 90 |
| BS5 | 8 | 7 | 19 | 95 |

# Fig. 6

# Fig. 7

# Fig. 8

| SAMPLE | CORRECT ANSWER RATE [%] P=M/N | QUALITY DETERMINATION (Th=75%) |
|--------|------------------------------|-------------------------------|
| BS1 | 50 | DEFECTIVE ITEM |
| BS2 | 90 | NON-DEFECTIVE ITEM |
| BS3 | 85 | NON-DEFECTIVE ITEM |
| BS4 | 90 | NON-DEFECTIVE ITEM |
| BS5 | 95 | NON-DEFECTIVE ITEM |

# Fig. 9

# Fig. 10

# Fig. 11

REFERENCE CHARACTERISTIC Ws(f) 43

NON-DEFECTIVE SAMPLE Wg(f) 44

45 DEFECTIVE SAMPLE Wd(f)

ACCELERATION AMPLITUDE

FREQUENCY f

0

# Fig. 12

# Fig. 13

STANDARD
DEVIATION OF
POSITION

FEATURE Q

DEFECTIVE ITEM    NON-DEFECTIVE ITEM

# Fig. 14

# Fig. 15

**Fig. 16**

TACTILE DEVICE INSPECTION APPARATUS ⟋50

COMMUNICATION I/F CIRCUIT ⟋51

ARITHMETIC PROCESSING CIRCUIT ⟋52
- DATA ACQUISITION UNIT ⟋52A
- QUALITY CHECK UNIT ⟋52B
- FEATURE COMPUTATION UNIT ⟋52C
- DETERMINATION PROCESSING UNIT ⟋52D

DISPLAY CIRCUIT ⟋54

STORAGE CIRCUIT ⟋53
- TEST RESULT ⟋D1
- SAMPLE CHARACTERISTIC DATA ⟋D5
- QUALITY CHECK RESULT ⟋D3
- FEATURE ⟋Q
- REFERENCE FEATURE ⟋D7
- INSPECTION TARGET CHARACTERISTIC DATA ⟋D9
- DETERMINATION RESULT ⟋D10

A1 B 92 91 90 A2

CLOCKWISE DIRECTION COUNTER-CLOCKWISE DIRECTION

93 94

EP 3 951 346 B1

# Fig. 17

ELECTRONIC DEVICE
90S

TACTILE DEVICE
INSPECTION APPARATUS
50

| GENERATE TRACTION ILLUSION | ~ 200 |

| GENERATE CHARAC-TERISTIC DATA | ~ 201 |

202
CHARACTERISTIC DATA
D5

| DETECT ANSWER OPERATION | ~ 203 |

| GENERATE TEST RESULT | ~ 204 |

205
TEST RESULT
D1

| COMPUTE CORRECT ANSWER RATE | ~ 210 |

| DETERMINE QUALITY | ~ 211 |

| COMPUTE REFERENCE DATA | ~ 212 |

| COMPUTE FEATURE | ~ 213 |

| COMPUTE REFERENCE FEATURE | ~ 214 |

# Fig. 18

ELECTRONIC DEVICE
90X

TACTILE DEVICE
INSPECTION APPARATUS
50

GENERATE
TRACTION ILLUSION ~220

GENERATE CHARAC-
TERISTIC DATA ~221

CHARACTERISTIC DATA
D9

222

COMPUTE
FEATURE ~223

DETERMINE
QUALITY ~224

OUTPUT DETERMI-
NATION RESULT ~225

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017115729 A

**Non-patent literature cited in the description**

- **TANABE TAKESHI et al.** Evaluation of the Perceptual Characteristics of a Force Induced by Asymmetric Vibrations. *IEEE TRANSACTIONS ON HAPTICS*, April 2018, vol. 11 (2), 220-231